(19) Europäisches Patentamt
European Patent Office
Office européen des brevets

(11) EP 3 789 857 A1

(12) EUROPEAN PATENT APPLICATION

(43) Date of publication:
**10.03.2021 Bulletin 2021/10**

(51) Int Cl.:
***G06F 3/041*** *(2006.01)* ***G01L 1/00*** *(2006.01)*

(21) Application number: **19195937.8**

(22) Date of filing: **06.09.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SABIC Global Technologies B.V.**
**4612 PX Bergen op Zoom (NL)**

(72) Inventors:
- **FARAH, Abdiaziz F.**
  **23955-6900 Thuwal (SA)**
- **ALSALEM, Fahad Khalid**
  **23955-6900 Thuwal (SA)**
- **CARAVEO FRESCAS, Jesus Alfonso**
  **23955-6900 Thuwal (SA)**
- **NAYAK, Pradipta K.**
  **23955-6900 Thuwal (SA)**
- **TAYEB, Mohammed A.**
  **23955-6900 Thuwal (SA)**

(74) Representative: **Elzaburu S.L.P.**
**Miguel Angel 21, 2nd floor**
**28010 Madrid (ES)**

# (54) THIN-FILM TRANSISTOR INTEGRATED WITH TRIBOELECTRIC LAYER

(57) An integrated triboelectric device and thin-film transistor is disclosed. An example device comprises a triboelectric layer configured to generate an electrical charge based on a contact event and an electrode layer. The electrode layer comprises a first portion configured as a gate for a thin-film transistor and a second portion configured to supply an electrical signal to the first portion based on the contact event. The device comprises a passivation layer disposed adjacent to the thin-film transistor and between the second portion of the electrode layer and the triboelectric layer.

EP 3 789 857 A1

## Description

### TECHNICAL FIELD

The disclosure generally relates to thin films, and more particularly to thin-film transistor devices and triboelectric sensors.

### BACKGROUND

Metal oxide semiconductor thin-film transistors (TFTs) have gained an increasingly interest in view of their application in flat-panel displays and beyond. Their research focus is merely centered on the realization of metal oxide semiconductors TFT yielding high carrier mobility, as well as good stability under bias, thermal and illumination stress. The influence of semiconductor composition, passivation layer, gate dielectric, and source/drain electrodes on the device performance and stability has been extensively investigated.

In the past decades, the fabrication of tactile sensor technology and metal oxide based TFT device have been primarily relying on conventional techniques, due to their mature fabrication procedures. For instance, photolithography approaches were adopted for TFT device patterning where rigorous chemical vapor deposition, sputtering, and atomic layer deposition protocols were used for the active material preparation. However, these techniques usually not only involve multistage procedures but also require harsh operational conditions, either dust-free or high vacuum, which raises the fabrication cost and limits the scalability of the target devices. Thus, there is a need for improved techniques for thin-film devices.

### SUMMARY

A thin-film device and method for forming the device is disclosed. The device can comprise a triboelectric sensor integrated with a thin-film transistor. Contact with the triboelectric sensor can cause a gate of the thin-film transistor to be switched on/off. An example device comprises a triboelectric layer configured to generate an electrical charge based on a contact event and an electrode layer. The electrode layer comprises a first portion configured as a gate for a thin-film transistor and a second portion configured to supply an electrical signal to the first portion based on the contact event. The device comprises a passivation layer disposed adjacent to the thin-film transistor and between the second portion of the electrode layer and the triboelectric layer.

An example method comprises forming an electrode layer and forming a thin-film transistor adjacent to a first portion of the electrode layer. The first portion is configured as a gate of the thin-film transistor. A second portion of the electrode layer extends from the thin-film transistor. The method comprises forming a passivation layer adjacent to the thin-film transistor and the second portion of the electrode layer, and forming a triboelectric layer adjacent to the passivation layer and configured to cause, in response to a contact event, the second portion of the electrode layer to supply an electrical signal to the first portion of the electrode layer.

Additional advantages will be set forth in part in the description which follows or can be learned by practice. It is to be understood that both the foregoing general description and the following detailed description are exemplary and explanatory only and are not restrictive.

### BRIEF DESCRIPTION OF THE DRAWINGS

The above-mentioned and other features and advantages of this disclosure, and the manner of attaining them, will become apparent and be better understood by reference to the following description of one aspect of the disclosure in conjunction with the accompanying drawings, wherein:

FIG. 1A is a diagram showing an example sensor in accordance with the present disclosure.
FIG. 1B shows an example process flow associated with a triboelectric sensor.
FIG. 2 shows an example device with a thin-film sensor and thin-film transistor.
FIG. 3 shows an example thin-film transistor.
FIG. 4A shows a picture of a fabricated device showing the active area as well as the contact pads for connection.
FIG. 4B shows measured output voltage of a sensor with an area of 3.12 $cm^2$ for a triboelectric blend using a 500 MOhm resistor.
FIG. 5 shows a comparison of triboelectric materials characterized under the same experimental conditions.
FIG. 6 shows transfer characteristics of fabricated, passivated and triboelectric coated TFTs.
FIGS. 7A and 7B show transfer characteristics of as fabricated, passivated and triboelectric coated TFTs with different device dimensions.

## DETAILED DESCRIPTION

Currently, multifunctional and miniaturized tactile sensor fabrication processes are challenging due to the inability to integrate a sufficient number of functionalities into a single device at low cost and high volume using traditional production technologies. Indisputably, the use of thin-film transistor (TFT) in organic, flexible and printed electronics technology offers this possibility. However, it must overcome some significant challenges relating to device interfacing and fabrication. Key among these technical impediments is the availability of subsystems (e.g., sensors, power, and circuitry) suitable for integration through TFT, as well as the ability to combine these components through compatible processes. However, Oxide TFTs are rather sensitive to humidity, ambient atmosphere, light, and the storage time. These TFT performance constraints can be solved with proper process conditions and an adequate passivation and light blocking layer. Since the doped oxide contains multiple components, the process window for high-performance TFTs could be very narrow. Protecting the metal oxide active layer from environmental contaminants during the fabrication process that defines the shape and functionality of each transistor is important to improving the stability and performance of such devices. Therefore, the active layer can be protected using a process called passivation, where a thin layer of an insulating material such as aluminum oxide ($Al_2O_3$) and other organic materials are deposited. The aluminum oxide ($Al_2O_3$) layer can be built up one monolayer at a time by atomic layer deposition (ALD), but this process is slow and therefore very costly. Physical vapor deposition (PVD) processes may provide higher productivity at similar performance.

For conventional manufacturing protocols in microelectronics, miniaturized electronic and mechanical components of a variety of materials are put together into tight spaces without compromising device performance. As protective coatings for nanostructured substrates and explicitly in TFT based nanoelectronics for functionality and reliability enhancement, poly(p-xylylene) polymer (e.g., referred to herein by generic name "parylene") and/or poly(chloro-p-xylylene) polymer (e.g., referred to herein by generic name "parylene C") obtained via chemical vapor deposition (CVD) process can be used for conformal solid film deposition on any surface. Use of parylene technology has a number of advantages such as providing smooth and pinhole-free conformal coatings with excellent exposed surface penetration abilities while the deposition process-taking place at room temperature. Parylene C can coat easily on thermal sensitive surfaces while suppressing thermal and mechanical stresses arising from the different thermal coefficient expansion of the coating and the substrate. In addition, the thermal polymerization of parylene C from the dimer precursor is spontaneous and requires no external catalyst or initiator. This unique polymerization process and chain growth into high molecular weight product under vacuum can make use of parylene protective coatings exempt of any contaminants that might affect the electrical conduction of the underneath TFT layered structure.

Disclosed herein is an integrated device that addresses at least the problems described herein. The device can comprise a passivated (e.g., using parylene) thin-film transistor (TFT) that is interfaced with triboelectric driven tactile sensor. The parylene layer can protect the semiconductor layer of TFTs from environment deterrent molecules, which in turn enhances the stability of the device over time. Moreover, the outermost layer can exhibit a triboelectric effect that generates a pulse of voltage (e.g., or current) upon contact with human touch due to electron affinity difference. The active triboelectric layer can be made of a photoactive thermoplastic copolymer and trifluoropropyl polyhedral oligomeric silsesquioxane (F-POSS) blend for tactile sensor technologies. The combination of simple surface modification and optoelectronic output of this device architecture can produce amongst the highest reported triboelectric performance and environmentally stable TFT device output parameters. The unique integration of solution processed triboelectric sensor unit with a circuit that can be fabricated using conventional thin-film techniques and depositions makes the disclosed device more adaptable, compact and convenient over other technologies for future wearable electronics and tactile sensor applications.

FIG. 1A is a diagram showing an example device 100 in accordance with the present disclosure. The device 100 can comprise a sensor, such as a triboelectric sensor.

The device 100 comprises a triboelectric layer 102. The triboelectric layer 102 can comprise a thin-film layer. As used herein the term thin-film layer can comprise a layer with a thickness of in a range of a nanometer to several micrometers (e.g., or several hundred micrometers). Some thin-film layers may be less than 100 nm. Other thin-film layers can have a thickness of 1 $\mu$m to 500 $\mu$m, 1 $\mu$m to 300 $\mu$m, or 1 $\mu$m to 200 $\mu$m. The thickness of the thin-film layer can depend on end application needs, power consumption design (e.g., low power battery driven), a combination thereof, and/or the like. A thin-film layer can be a monolayer.

The triboelectric layer 102 can output a signal based on a triboelectric effect. The triboelectric layer 102 is configured to output an electrical signal (e.g., voltage or a current signal) in response to an interaction (e.g., mechanical contact, moving into proximity, contact event) with an object 103. The object 103 can be configured to electrically and/or mechanically apply a touch or a force event to the triboelectric layer 102. The triboelectric layer 102 can comprise a triboelectric material. The triboelectric material can comprise a polymer. The triboelectric material can comprise a triboelectric negative layer. The triboelectric material can comprise a triboelectric positive layer. Though only one triboelectric layer 102 is shown, it should be understood that in some implementations multiple triboelectric layers (e.g., stacked on top of triboelectric layer 102 or otherwise adjacent to) can be used.

The triboelectric material can comprise one or more of photoactive polycarbonate thermoplastic material (XPC) or trifluoropropyl polyhedral oligomeric silsesquioxane (F-POSS). The triboelectric material can comprise photoactive polycarbonate thermoplastic and trifluoropropyl polyhedral oligomeric silsesquioxane (XPC-F-POSS). XPC-F-POSS can comprise a polycarbonate polymer (e.g., XPC) with 3.5% weight of benzophenone moieties in the polymer chain. Examples of the triboelectric material can comprise polyvinylidene fluoride (PVDF), polyvinyl chloride (PVC), polytetrafluoroethene (PTFE) (e.g., Teflon™), polyvinylidene fluoride trifluoroethylene (PVDF-TrFE), a combination thereof, and/or the like.

XPC is a photoactive cross-linkable polycarbonate resin that includes 0.5 mole % to 5.0 mole % endcap groups derived from monohydroxybenzophenone, including from 1.0 mole % to 5.0 mole, or from 1.5 mole % to 4.5 mole %, or from 2.0 mole % to 4.5 mole %, or from 2.5 mole % to 4.0 mole %, or from 3.0 mole % to 4.0 mole % endcap groups derived from the monohydroxybenzophenone. Most desirably, the monohydroxybenzophenone is 4-hydroxybenzophenone. In a particular aspect the resin includes 3.5 mole % endcap groups derived from 4-hydroxybenzophenone, as shown in formula (1) below:

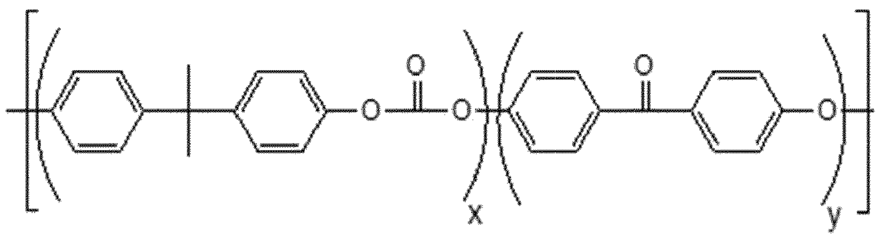

y = 3.5% (1)

XPC may be formed in accordance with the methods described in U.S. Patent Publication No. 2017/0247507, the disclosure of which is incorporated herein by this reference in its entirety. In one aspect the XPC is derived from bisphenol-A polycarbonate and includes 3.5 mole % benzophenone moieties.

F-POSS is trifluoropropyl polyhedral oligomeric silsesquioxane, and has the chemical structure shown in formula (2):

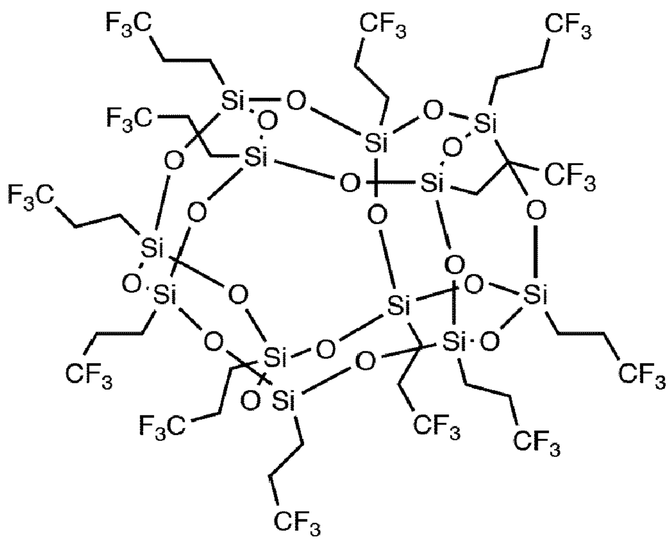

(2)

The triboelectric material can comprise photoactive polycarbonate trifluoropropyl polyhedral oligomeric silsesquioxane (XPC-F-POSS), polyvinylidene difluoride (PVDF), polydimethylsiloxane (PDMS), poly(methyl methacrylate) (PMMA), polytetrafluoroethylene (PTFE), polymer foams, poly(methyl methacrylate)-co-poly(1H-1H-perfluoroctyl methacrylate), acetate, mica, nylon, perfluorinated polymers, copolymers of the described polymers, and combinations thereof. The triboelectric material can comprise polyvinyl chloride (PVC), polytetrafluoroethene (PTFE) (e.g., Teflon™), polyvinylidene chloride (PVDC), polycarbonate (PC), functionalized PC, polyvinylidene difluoride trifluoroethylene

(PVDF-TrFE), a combination thereof, and/or the like.

The triboelectric layer 102 can comprise a first side 105. The triboelectric layer 102 can comprise a second side 107. The second side 107 can be opposite the first side 102. The first side 105 can receive the interaction (e.g., physical or electrical force) with the object 103. The object 103 can comprise an extremity (e.g., a finger), a surface, and/or a physical object. The first side 105 can receive contact with the object 103. The contact can comprise a touch event, placing the object 103 on the first side 105, moving the first side 105 to come in contact with the object 103, and/or the like. In some implementations, the first side 105 can comprise a surface patterning 109. The surface patterning 109 can enhance (e.g., increase) the contact surface area and/or the friction coefficient of the triboelectric layer 102. Example sensor structures and effects of the surface patterning can be found in International Publication No. WO 2018002752 A1 filed on June 12, 2017, which is hereby incorporated by reference in its entirety.

The device 100 comprises a passivation layer 104. The passivation layer 104 can be disposed adjacent to the triboelectric layer 102. As used herein, the term adjacent when used in relation to a layer can comprise next to, in contact with, above, on top of, below, coupled to, or a combination thereof. The term adjacent can allow for one or more intervening layers between two layers that are adjacent. The terms above, below, and on top of when used in relation to one layer being above, below, or on top of another layer (e.g., or material stack of layers) is specific to the orientation shown in the figures of the present application (e.g., FIGs. 1A, 2, 3) in which layers are shown vertically stacked in a vertical direction from the bottom of the figures to the top of the figures. A layer that is above another layer is vertically higher than the other layer according to the orientation shown in the figures (e.g., is shown closer to the top of the figures than the other layer). A layer that is below another layer is vertically lower than the other layer according to the orientation shown in the figures (e.g., is shown closer to the bottom of the figures than another layer). A layer that is on top of another layer is above the other layer and has at least a portion of a bottom surface in contact with at least a portion of a top surface of the other layer. It should be understood that if the layers of an implemented device are rotated to a different orientation than the orientation shown, the layers in the different orientation are still understood to be above, below, or on top of another layer if such relationship applies when oriented in the manner shown in the figures of the present application.

The passivation layer 104 can be in contact with a second side 107 of the triboelectric layer 107. The passivation layer 104 can comprise a polymer. The passivation layer 104 can comprise a poly(p-xylylene) polymer, such as parylene, parylene C, and/or the like.

Parylene is the generic name for poly-para-xylylene unique polymer series. Examples types of parylene can comprise parylene AF-4 (e.g., parylene with aliphatic fluorination 4 atoms), parylene VT-4 (e.g., parylene with per-fluorinated aromatic ring), parylene C, or a combination thereof. Poly(chloro-p-xylylene) polymer (e.g., parylene C) is produced from the same monomer modified only by the substitution of a chlorine atom for one of the aromatic hydrogens as shown in the chemical structure below. Poly(chloro-p-xylylene) polymer forms a thin-film on surfaces from its dimer precursor with no pinholes and with excellent electrical insulation, moisture and chemical resistance as well as good mechanical protection. Poly(chloro-p-xylylene) polymer has a chemical structure as follows:

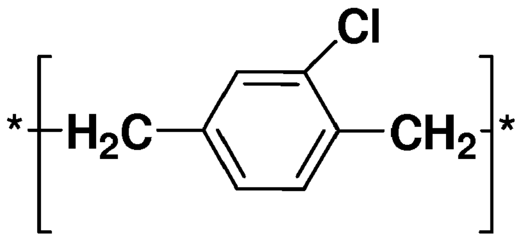

(3)

The device 100 can comprise an electrode 106. The electrode 106 can be disposed adjacent to the passivation layer 104, the triboelectric layer 102, or a combination thereof. The electrode 106 can comprise a thin-film layer. The electrode 106 can comprise a conductive material, such as a metal. The electrode 106 can comprise titanium, gold, a combination thereof, and/or the like.

The device 100 can comprise a substrate 108. The substrate can be disposed adjacent to the triboelectric layer 102, the passivation layer 104, the electrode 106, or a combination thereof. The electrode 106 can be disposed on top of (e.g., in contact with) the substrate 108. The substrate 108 can comprise a rigid or flexible material. The substrate 108 can comprise a thin-film layer. The substrate 108 can comprise a polymer, such as polyimide, and silicon comprising a layer of polyimide. The substrate 106 can comprise Polyetherimide, Polyethylene naphthalate (PEN), Polyethylene terephthalate (PET), Polycarbonate, one or more thin sheets of metal, and/or a combination thereof. An example rigid material can comprise indium tin oxide (ITO), aluminum doped-zinc oxide (AZO), gallium-doped zinc oxide (GZO), or tin oxide (e.g., coated on glass).

FIG. 1B shows an example process flow associated with a triboelectric sensor. The process can begin with a

touch/force event. The touch/force event can comprise an object contacting a surface of a triboelectric layer. The object can comprise a finger or any object. The object can be electropositive, and the triboelectric layer can be electronegative (e.g., or vice versa). The touch event can be detected by a readout circuit. The triboelectric layer can generate an electric signal, such as a current, a voltage, and/or the like. The electrical signal can be detected by the readout circuit. The magnitude of the electrical signal (e.g., voltage) can be directly proportional to the force exerted on the sensor. The read-out circuitry can interpret this electrical signal (e.g., voltage signal, analog signal) and can convert the electrical signal to a digital signal. The electrical signal can be transmitted to a processing unit. The read-out circuitry can comprise an interface with other electronics to send either a voltage level, current level, a digital equivalent, or a combination thereof to a processing unit, where the appropriate action is triggered. The processing unit can be configured to process the signal to determine a characteristic of the signal, the presence of the object, the occurrence of a touch event, the force of the touch event, a combination thereof, and/or the like.

FIG. 2 shows an example device in accordance with the present disclosure. The device 200 can comprise a thin-film triboelectric sensor 202. The device 200 can comprise a thin-film transistor 204. In FIG. 2, common architecture is shown of an integrated thin-film triboelectric sensor 202 (e.g., touch/force sensors) with a thin-film transistor 204 having a single common electrode configuration. The single electrode configuration can be selected for ease of fabrication. The electrode of the triboelectric sensor 202 can be made of the same material as the thin-film transistor 204's gate, leading to an efficient, fast, and low-cost scale-up process circumventing problems associated with upscaling of the substrate size with no need of additional sputtering step. A simple and cost-effective solution with less materials consumption and processing steps leads to stable semiconductor, electrode /conductive layer and passivation layer at different interfaces.

The device 200 comprises a triboelectric layer 205 configured to generate an electrical charge based on a contact event (e.g., mechanical contact). The triboelectric layer 205 can comprise any of the features of the triboelectric layer 102 of FIG. 1A and/or any other feature of a triboelectric material as described elsewhere herein. At least a portion of the triboelectric layer 205 can be disposed adjacent to (e.g., above, on top of) a material stack comprising the thin-film transistor 204. The triboelectric layer 205 can comprise a photoactive thermoplastic copolymer and a trifluoropropyl polyhedral oligomeric silsesquioxane. The triboelectric layer 205 can be formed by solution processing, electro-spinning, extrusion, melt processing, or combination thereof.

The device 200 can comprise a substrate 206. The substrate 206 can comprise any of the features of the substrate 108 of FIG. 1A and/or any other feature of a substrate as described elsewhere herein.

The device 200 comprises an electrode layer 208. The electrode layer 208 can be disposed adjacent to (e.g., on top of) the substrate 206. The electrode layer 208 comprises a first portion 210 and a second portion 212. The first portion 210 can be disposed in a material stack of the thin-film transistor 204. The second portion 212 can extends from the first portion 210 external to the material stack. The second portion 212 is configured to supply an electrical signal to the first portion 210 based on a contact event (e.g., with the triboelectric layer 205, such as mechanical contact). An electrical charge in the triboelectric layer 205 can cause the second portion 212 to supply an electrical signal to the first portion 210.

The first portion 210 is configured as a gate for the thin-film transistor 204. The thin-film transistor 204 (e.g., or the device 200) can comprise a gate insulator layer 214 (e.g., gate dielectric layer). The gate insulator layer 214 can be disposed adjacent to the first portion 210 of the electrode layer 208. The thin-film transistor 204 (e.g., or the device 200) can comprise a semiconductor layer 216. The semiconductor layer 216 can be disposed adjacent to the gate insulator layer 214. The thin-film transistor 204 (e.g., or the device 200) can comprise a source 218 and a drain 220. The source 218 and the drain 220 can be disposed adjacent to the semiconductor layer 216.

The device 200 comprises a passivation layer 222 (e.g., barrier layer). The passivation layer 222 can be disposed adjacent to (e.g., at least partially on top of) the thin-film transistor 204. The passivation layer 222 can be disposed between the second portion 212 of the electrode layer 208 and the triboelectric layer 205. The passivation layer 222 can be disposed between one or more layers of the thin-film transistor 204 and the triboelectric layer 205.

The passivation layer 222 can comprises a first surface 224 and a second surface 226 opposite the first surface 224. The first surface 224 can be adjacent to the thin-film transistor 205. The passivation layer 222 (e.g., the first surface 224) can be adjacent to (e.g., above, on top of, in contact with) the gate insulator layer 214, the semiconductor layer 216, the electrode layer 208, the source 218, the drain 218, or a combination thereof. The second surface 226 can be adjacent to the triboelectric layer 205.

The passivation layer 222 can comprise any of the features of the passivation layer 104 of FIG. 1A and/or any other feature of a passivation layer as described elsewhere herein. The passivation layer 222 can comprise a polymer, a fluorinated polymer, a fluorinate parylene, parylene, parylene C, parylene AF-4 (e.g., parylene with aliphatic fluorination 4 atoms), parylene VT-4 (e.g., parylene with per-fluorinated aromatic ring), or a combination thereof. The passivation layer 222 can be formed at room temperature. The passivation layer can be formed in a temperature range of 20°C to 30°C, 20°C to 25°C, 15°C to 30°C, or a combination thereof. The passivation layer can be formed using a chemical vapor deposition.

FIG. 3 shows another representation of the thin-film transistor 204 of FIG. 2. The triboelectric layer 205 can be

formed by dissolving an XPC polymer in THF (e.g., to have a 20 wt% solution). F-POSS can be added to the solution (e.g., 15 wt%) and dissolved. Then, the resulting solution can be spin coated onto one or more layers, such as the substrate 206, the electrode layer 208 (e.g., first portion 210, second portion 212), the gate insulator layer 214, the semiconductor layer 216, the source 218, the drain 220, the passivation layer 222, or a combination thereof. As example, the resulting solution can be spin coated at a speed of 1000 rpm. The spin coated layer can be annealed. The annealing can be performed at 80°C, under a vacuum, in a conventional oven, for 2-4 hours, or a combination thereof. As another example, photoactive copolymer (XPC) and the F-POSS molecules in the form of pellets/solid can be dissolved in THF solution to prepare 20% w/v solution and stirred at 40°C for 5 hrs until complete and transparent viscous solution is obtained.

The source 218 and/or drain 220 can comprise titanium, gold, a combination thereof, and/or the like. The source 218 and/or drain 220 can comprise a first layer of 10 nm to 50 nm titanium and a second layer of 60 nm to 100 nm gold electrodes. The source 218 and/or the drain 220 can comprise a conducting material, such as molybdenum (Mo), nickel (Ni), or a combination thereof. The source 218 and/or the drain 220 can comprise a transparent conducting oxide, such as tin-doped indium oxide (ITO), gallium-doped zinc oxide (GZO), tin dioxide ($SnO_2$), Fluorine-doped tin oxide (FTO), tantalum nitride. The source 218 and/or the drain 220 can comprise a conducting metal, such as titanium (Ti).

The semiconductor layer 216 can comprise a metal oxide semiconductor. The semiconductor layer 216 can comprise indium, gallium, zinc, or a combination thereof. The semiconductor layer 216 can comprise indium gallium zinc oxide, indium zinc oxide, or a combination thereof. The semiconductor layer 216 can have a thickness in a range of 15 nm to 50 nm, 25 to 35 nm, or a combination thereof. The semiconductor layers 216 can be deposited by a radio frequency sputtering process, DC-sputtering, PECVD, ALD, or any other solution deposition process.

The gate insulator layer 214 can comprise hafnium oxide ($HfO_2$). The gate insulator layer 214 can be formed using atomic layer deposition (e.g., 25 nm to 100 nm). The gate insulator layer 214 can be formed in a temperature range of 100°C to 200°C. The gate insulator layer 214 can be formed based on water, ozone $O_3$, hydrogen peroxide as source of oxygen, or a combination thereof.

The electrode layer 208 (e.g., or the first portion 210) can comprise aluminum doped zinc oxide (AZO) thin film. The electrode layer 208 (e.g., or the first portion 206) can have a thicknes in a range of 50 nm to 200 nm. The substrate 206 can comprise a transparent material, such as glass. The electrode layer 208 can comprise a transparent conducting oxide, such as tin-doped indium oxide (ITO), gallium-doped zinc oxide (GZO), tin dioxide ($SnO_2$), Fluorine-doped tin oxide (FTO), tantalum nitride, or a combination thereof. The electrode layer 208 can comprise a conducting metal, such as titanium (Ti), molybdenum (Mo), nickel (Ni), chromium (Cr), or a combination thereof.

The substrate 206 can be formed or obtained from a manufacturer. The substrate 206 can be (e.g., or comprise) a thin-film layer. The substrate 206 can comprise an insulating material, such as a rigid glass or flexible plastic material. For flexible substrates, the substrate 206 may comprise a plastic substrate (e.g., that can withstand the temperature range), such as polyimide (PI), polyethylene naphthalate (PEN), polyetherimide (PEI) or polyethylene terephthalate (PET).

An example device as described herein may comprise any of the following non-conventional features. XPC-F-POSS can be used a triboelectric sensing material. An XPC-F-POSS blend exhibiting triboelectric effect may be disposed on a parylene passivated thin-film transistor (TFT). The triboelectric material can comprise an XPC-F-POSS blend showing superior triboelectric performance in the range of (3-15 wt %) of F-POSS. The triboelectric material can comprise an XPC-F-POSS blend exhibiting higher voltage output than (PVDF-TrFE, PVC, XPC, F-POSS) all interfaced with parylene passivated TFT and other triboelectric materials

An example device can comprise an integrated triboelectric sensor (e.g., using XPC-F-POSS) with TFT device. An example device can be configured to enable semiconductor technology for tactile sensing applications. An example device can comprise an integrated tactile/TFT devices with appropriate transfer characteristics (e.g., mobility, excellent SS, large $I_{on}/I_{off}$ and low power operation).

An example device can comprise an integrated triboelectric sensor (e.g., using XPC-F-POSS) with TFT device configured for low power applications (wearables, tactile sensing, portable electronics). An example device can comprise an integrated triboelectric sensor (e.g., using XPC-F-POSS) with TFT device configured for monitoring applications (e.g., gas sensing, environmental threat, human health/performance monitoring, controlling human-machine interfaces, controlling devices). An example device can comprise an integrated triboelectric sensor (e.g., using XPC-F-POSS) with TFT device that is adaptable, compact, convenient, or a combination thereof.

An example device can be formed using solution process-able materials technology for TFTs and peripheries (e.g., semiconductor, passivation layers, gas insulator). An example device can be formed using solution process-able materials technology for TFTs (e.g., an increase of performance compared with silicon based technology, significant lowering of process cost compared to sputtering).

An example device can be configured for integrated tactile/TFT device utilizing existing industry standard tool infra-structure. The device can be formed using coating technology/passivation process amenable to semiconductor (e.g., circumvent problems associated with upscaling of the substrate size when to compare to sputtering, less number

of processing steps, stable semiconductor/materials at interfaces, cost-effective solution).

## EXAMPLES

In this section, description of the fabrication and characterization of an example device according to the present disclosure are disclosed. Though the following is illustrated using example values, processes, and materials, it is contemplated that other materials, processes, and values can be used according to design specifications.

Triboelectric sensor fabrication.

Step 1: Substrate preparation and cleaning. A 100 μm PET and ULTEM, 125 μm PEN, and ITO coated glass substrates were used to build the device. After cleaning the substrate in an ultrasonic cleaner using acetone, isopropanol (IPA), and deionized water, for 5 minutes in each solvent, it was blown-dried with high purity nitrogen.

Step 2: Electrode deposition and patterning. 10-50 nm Titanium/ 60-100 nm Gold electrodes were patterned using conventional photolithography techniques - if required, and electron beam evaporated. A 4 um-thick AZ ECI3027 positive photoresist (PR) was first spin coated on the substrate. The PR layer was then exposed with a broadband UV light source at a dose of 200 $mJcm^{-2}$ and a photomask to transfer the desired features. The PR was then developed using AZ 726 MIF developer. Ti/Au electrodes were then deposited using an electron beam evaporator without breaking vacuum. Lift-off using acetone was performed lastly to remove the unwanted areas and complete the patterning process.

Step 3: Passivation layer deposition. A passivation layer comprising parylene was deposited on top of the conductive layer by Parylene chemical vapor deposition system (CVD) using 2-3 grams of materials, which resulted in 0.4-0.6 μm thick film.

Step 4: Triboelectric layer deposition. XPC polymer was dissolved in THF for 3-4 hours to have a 20 wt% solution. F-POSS in the appropriate load (15 wt%) was added to the solution and stirred until dissolved for around 2-4 hrs. Then, the solution was spin coated on the substrate (with the electrodes already on it) at speed of 1000 rpm, forming a layer of around 2.8 um XPC-F-POSS blend. The film was annealed in a conventional oven for 2-4 hours at 80 °C under vacuum. For comparison, Polyvinyl chloride (PVC), and PVDF-TrFE triboelectric layers were tested. The formulations were prepared by first dissolving these polymers in THF, followed by stirring for 2-4 hours to have a 20 wt% solution. Then, the solutions were spin coated on the electrode-coated substrates at a fixed spin speed of 1000 rpm for 30 seconds. Finally, these films were cured in a conventional oven for 2-4 hours at 50-100°C under vacuum.

Triboelectric sensor characterization.

The triboelectric sensor has been characterized using a system electrometer, Keithley 6514, to measure the voltage drop across the load. Touch event has been simulated by applying force with a pneumatic unit that is stroke-controlled. When the slider touches the sensor, a positive voltage is generated indicating that the sensor has been pressed. Upon release, a voltage with an opposite polarity is measured, in accordance with the mechanism of contact electrification. A custom-made Labview program has been used to record the voltage generated by the sensor as a function of time.

FIG. 4A shows a picture of a fabricated device showing the active area as well as the contact pads for connection with the appropriate electronics. FIG. 4B shows measured output voltage of a sensor with an area of 3.12 $cm^2$ for an XPC-F-POSS blend using a 500 MOhm resistor. A maximum pulse voltage in the order of 5.5 V is generated when the surface in contact is released, in accordance with the principle of contact electrification.

FIG. 5 shows triboelectric materials comparison. Output voltage of the different state-of-the-art triboelectric materials characterized under the same experimental conditions. The average voltage response is shown for different active materials (XPC-FPOSS, PVC, and PVDF-TrFE) with and without a presence of a Parylene layer, under the same experimental conditions. First, XPC-F-POSS is more electronegative than PVDF-TrFE, and PVC. Second, it is noticed that although a Parylene is not a tribo-negative material, it does not much counterpart the triboelectric effect of the active layers. Small reduction in the output performance of the triboelectric effect is apparent when a thin film of Parylene is coated in between the active and conductive layers. The reduction is trivial and calculated to be less than 15%.

InGaZnO Thin-Film Transistor Fabrication

Step 1: Substrate preparation.

Glass substrates of 1.1 mm thick were used to build the TFT devices. The glass substrates were sonicated in acetone, isopropanol and deionized water separately and then lastly blown-dried by a high purity nitrogen ($N_2$) gas gun.

Step 2: Gate electrode deposition.

Aluminum doped zinc oxide (AZO) thin film of thickness 170 nm was used as the gate electrode. The AZO films were deposited on cleaned glass and PI films by ALD at 160°C using Diethylzinc (DEZ) and trimethylaluminum (TMA) from Sigma Aldrich as the source of Zn and Al and DIW as the source of oxygen. The ratio of DEZ sub-cycle (DIW/$N_2$-purge/DEZ/ $N_2$-purge) to TMA sub-cycle (DIW/ $N_2$-purge /TMA/ $N_2$-purge) was fixed as 20:1 to get AZO film with low sheet resistance (e.g.,110 Ω/square). The supper cycle [(DIW/$N_2$-purge/DEZ/ $N_2$-purge) +(DIW/ $N_2$-purge /TMA/ $N_2$-purge)] was repeated 45 times to get AZO films with thickness of 170 nm. The pulse time of DEZ, TMA and DIW precursor was fixed as 0.015 seconds and 20 sccm of $N_2$ gas was used as the process gas.

Step 3: Gate electrode patterning.

The AZO film was patterned by standard photolithography and wet etching. A 4μm AZECI3027 positive photoresist (PR) was first spin coated on the substrate. The PR layer was then exposed with a broadband UV light source at a dose of 200 $mJcm^{-2}$ and then developed using AZ 726 MIF developer to get the desired features of the gate electrode. The unwanted areas of the AZO film were then etched for 35 seconds using diluted (0.5% v/v) hydrochloric acid. After etching AZO film the remnant PR layer was removed by cleaning with acetone, isopropanol and DIW and finally dried using $N_2$ gas.

Step 4: Gate insulator layer (e.g., or gate dielectric layer) deposition and post annealing.

Hafnium oxide ($HfO_2$) was used as the gate insulator layer. The gate insulator layer was deposited on top of the AZO gate electrodes by ALD technique using tetrakis(dimethylamido)hafnium(IV) from Sigma Aldrich as the Hf precursor and ozone as the oxygen precursor and 90 sccm of $N_2$ gas was used as the process gas. The hafnium oxide insulating layer can also be deposited using water or hydrogen peroxide as the oxygen precursor. The pulse time of tetrakis(dimethylamido)hafnium(IV) and ozone was fixed as 0.2 second and 0.15 second, respectively. The growth temperature for the $HfO_2$ film was 160°C and the films were post-annealed at 120°C in air for 2 hours.

Step 5: InGaZnO semiconductor layer deposition.

Indium gallium zinc oxide thin film was deposited on top of the $HfO_2$ layer by radiofrequency sputtering (Angstrom Engineering) from a 2" InGaZnO (2:1:1) target (Super Conductor Materials Inc.) under the deposition conditions as mentioned in Table 1.

**Table 1.**

| Parameter | Values |
|---|---|
| InGaZnO composition | In:Ga:Zn= 2:1:1 |
| Power (Watts) | 48 |
| Deposition Pressure (mTorr) | 1.4 |
| Deposition Temperature (°C) | Room temperature |
| Relative Oxvgen Partial Pressure (*Opp*)* | 3.2% |
| Thickness (nm) | ~25nm |
| Pre-sputtering Time (s) | 300 seconds |

$$*O_{PP} = \frac{\text{Oxygen flow (O2)}}{\text{total flow (Ar+O2)}}$$

Step 6: InGaZnO semiconductor patterning.

The InGaZnO semiconductor film was patterned by standard photolithography and wet etching. A 4 μm AZECI3027 positive photoresist (PR) was first spin coated on the substrate. The PR layer was then exposed with a broadband UV light source at a dose of 200 $mJcm^{-2}$ and then developed using AZ 726 MIF developer to get the desired features of the gate electrode. The unwanted areas of the InGaZnO film was then etched for 60 seconds using diluted (4% v/v) hydrochloric acid. After etching the InGaZnO film the remnant PR layer was removed by cleaning with acetone, isopropanol and DIW and finally dried using $N_2$ gas.

Step 7: Gate via patterning.

To create access to the gate electrode through $HfO_2$ gate insulator, via holes were formed by standard photolithography and dry etching. A 4 $\mu$m AZECI3027 positive photoresist (PR) was first spin coated on the substrate. The PR layer was then exposed with a broadband UV light source at a dose of 200 $mJcm^{-2}$ and then developed using AZ 726 MIF developer to get the desired features of the via-hole pattern. Then $HfO_2$ layer from the gate via pattern was etched by dry etching using $CHF_3$ (20 sccm) and Ar gas (4 sscm) plasma with an etching rate of 55nm/minute. After etching the $HfO_2$ film the remnant PR layer was removed by cleaning with acetone, isopropanol and DIW and finally dried using $N_2$ gas.

Step 8: Source-drain contact deposition and patterning.

A bi-layer of 10nm titanium and 60 nm gold source and drain electrodes were patterned using conventional photolithography techniques and electron-beam evaporation deposition. A 4 um-thick AZ ECI3027 positive photoresist (PR) was first spin coated on the substrate. The PR layer was then exposed with a broadband UV light source at a dose of 200 $mJcm^{-2}$ and a photomask to transfer the desired features. The PR was then developed using AZ 726 MIF developer. Titanium (10 nm) and gold (60 nm) electrodes were then deposited using thermal evaporation deposition. Lift-off using acetone was performed to remove the unwanted areas and cleaned in isopropanol and DIW to complete the patterning process.

Step 9: Post-annealing of TFTs

After the whole fabrication process, the TFTs were annealed at 160°C for 2hours in air ambient to get better performance and stability.

InGaZnO TFT characterization

The current and voltage characteristics of TFTs were measured using an Agilent B 1500A semiconductor device parameter analyzer and Cascade Summit 1100 probe station under dark and ambient conditions. Transfer characteristic curves of the TFTs were obtained by sweeping the voltage applied to the gate electrode at a fixed voltage applied to the drain electrode while the source electrode was maintained as the common electrode (grounded).

FIG. 6 shows measured transfer characteristic curves of as fabricated TFT, parylene passivated TFT and (XPC-FPOSS) coated film on the top of parylene passivated TFT device. In all cases, the device performance exhibited the intrinsic properties of the InGaZnO TFTs. Moreover, the ($I_D$-$V_G$) curves of the devices are almost identical to each other, indicating that the deposition of the parylene passivation layer not only introduces negligible impact on the InGaZnO back channel but also provides good interface property between the parylene on the top of InGaZnO layer and the solution processed XPC-FPOSS film. The TFT device performance parameters are summarized in Table 2.

**Table 2.**

| | Mobility ($cm^2$/Vs) | Vth(V) | SS(mV/dec) | $I_{on}/I_{off}$ |
|---|---|---|---|---|
| As Fabricated | 17.12 | 0.12 | 97 | $10^9$ |
| Parylene C (2g) | 17.60 | 0.11 | 92 | $10^9$ |
| Parylene C (2g) + XPC-FPOSS | 17.76 | 0 | 106 | $10^9$ |

It can be deduced that the addition of XPC-FPOSS film to the device structure meets the basic requirements and is compatible with parylene passivated InGaZnO TFTs. The results showed an obvious improvement in mobility when the passivated devices are coated with the thermoplastic triboelectric (XPC-FPOSS) layer. Thus, the use of parylene as passivating layer in InGaZnO TFTs results in InGaZnO TFTs exhibiting overall stable and high performance TFTs, which is even further improved with the addition of XPC-FPOSS. If a TFT has a steep subthreshold slope (SS) such as in this example case, where the TFTs exhibited (SS) values in the range (92-106 mV/dec), the sensitivity of current to bias variations is higher. Circuit design in this region of operation could be challenging, although a steep SS provides a high intrinsic gain. A high intrinsic gain is important figure-of-merit (FoM) for circuit design, as force touch-induced parametric variations would affect the device performance output in the circuit of the integrated device. A positive and negative gate bias measurements were carried out with a stress voltage (Vs) of (-5V to +10V), respectively, in air ambient for comparison purpose. The observed threshold voltage (Vth) was very small supporting that the InGaZnO

channels in our TFTs are not impacted by the oxygen and water molecules in the ambient atmosphere. Invariable Vth for XPC-FPOSS coated on parylene passivated TFTs can be regarded as an excellent passivating layer by virtue of its ability to stop the penetration of oxygen and water from ambient. The long-term stability of the devices passivated by parylene and coated with XPC-FPOSS layer were tested after storage in ambient environment for more than two weeks and compared with as fabricated TFTs. No degradation attributes of the device performance is observed after storage in ambient environment. Therefore, the parylene/XPC-FPOSS double-layered passivation is able to protect the device from gaseous molecules to diffuse in and, hence the device electrical performance is rather stable in ambient atmosphere. These results were also supported by the observed invariant and large ($I_{on}/I_{off}$) values along with small hysteresis pattern for all devices.

FIGs. 7A and 7B show transfer characteristics of as fabricated, parylene passivated and (XPC-FPOSS) coated TFTs with different device dimensions. The results do not reveal any ($I_D$-$V_G$) curve differences other than negligible hysteresis confirming that parylene/XPC-FPOSS layer is an effective barrier system preventing oxygen and water diffusion to the integrated devices.

The present disclosure can comprise at the least the following aspects.

Aspect 1. A device comprising, consisting of, or consisting essentially of: a triboelectric layer configured to generate one or more of an electrical charge, a voltage, or a current based on a contact event; an electrode layer comprising a first portion configured as a gate for a thin-film transistor and a second portion configured to supply an electrical signal to the first portion based on the contact event; and a passivation layer disposed adjacent to the thin-film transistor and between the second portion of the electrode layer and the triboelectric layer.

Aspect 2. The device of Aspect 1, wherein the electrode layer is disposed adjacent to a substrate.

Aspect 3. The device of any one of Aspects 1-2, wherein at least a portion of the triboelectric layer is disposed above a material stack (e.g., at least a portion of the triboelectric layer extends above a layer in the material stack) comprising the thin-film transistor.

Aspect 4. The device of any one of Aspects 1-3, wherein the first portion is disposed in a material stack of the thin-film transistor and the second portion extends from the first portion external to the material stack.

Aspect 5. The device of any one of Aspects 1-4, wherein the passivation layer comprises one or more of poly(p-xylylene) polymer or poly(chloro-p-xylylene) polymer.

Aspect 6. The device of any one of Aspects 1-5, wherein passivation layer is formed in a temperature range of 15°C to 35°C.

Aspect 7. The device of any one of Aspects 1-6, wherein passivation layer is formed using chemical vapor deposition.

Aspect 8. The device of any one of Aspects 1-7, wherein the triboelectric layer comprises a photoactive thermoplastic copolymer and a trifluoropropyl polyhedral oligomeric silsesquioxane.

Aspect 9. The device of any one of Aspects 1-8, wherein the thin-film transistor comprises, consists of, or consists essentially of: a gate insulator layer adjacent to the first portion of the electrode layer; a semiconductor layer adjacent to the gate insulator layer; and a source and drain adjacent to the semiconductor layer.

Aspect 10. The device of Aspects 9, wherein the passivation layer is in contact with one or more of the gate insulator layer, the semiconductor layer, the electrode layer, the source and drain, or a combination thereof.

Aspect 11. The device of any one of Aspects 1-10, wherein the triboelectric layer is formed by solution processing, electro-spinning, extrusion, melt processing, or combination thereof.

Aspect 12. A system comprising the device of any one of Aspects 1-11.

Aspect 13. A method comprising, consisting of, or consisting essentially of: forming an electrode layer; forming a thin-film transistor adjacent to a first portion of the electrode layer, wherein the first portion is configured as a gate of the thin-film transistor, and wherein a second portion of the electrode layer extends from the thin-film transistor; forming a passivation layer adjacent to the thin-film transistor and the second portion of the electrode layer; and forming a triboelectric layer adjacent to the passivation layer and configured to cause, in response to a contact event, the second portion of the electrode layer to supply an electrical signal to the first portion of the electrode layer.

Aspect 14. The method of Aspect 13, wherein the electrode layer is formed adjacent to a substrate.

Aspect 15. The method of any one of Aspects 13-14, wherein the second portion of the electrode layer extends beyond an edge of a material stack comprising one or more layers of the thin-film transistor.

Aspect 16. The method of Aspect 13, wherein the passivation layer comprises a first surface and a second surface opposite the first surface, wherein the first surface is adjacent to the thin-film transistor and the second surface is adjacent to the triboelectric layer.

Aspect 17. The method of any one of Aspects 13-16, wherein at least a portion of the triboelectric layer is disposed above a material stack comprising the thin-film transistor.

Aspect 18. The method of any one of Aspects 13-17, wherein the first portion is disposed in a material stack of the thin-film transistor and the second portion extends from the first portion external to the material stack.

Aspect 19. The method of any one of Aspects 13-18, wherein the passivation layer comprises one or more of poly(p-xylylene) polymer or poly(chloro-p-xylylene) polymer.

Aspect 20. The method of any one of Aspects 13-19, wherein passivation layer is formed in a temperature range of 15°C to 35°C.

Aspect 21. The method of any one of Aspects 13-20, wherein passivation layer is formed using chemical vapor deposition.

Aspect 22. The method of any one of Aspects 13-21, wherein the triboelectric layer comprises a photoactive thermoplastic copolymer and trifluoropropyl polyhedral oligomeric silsesquioxane.

Aspect 23. The method of any one of Aspects 13-22, wherein the thin-film transistor comprises, consists of, or consists essentially of: a gate insulator layer adjacent to the first portion of the electrode layer; a semiconductor layer adjacent to the gate insulator layer; and a source and drain adjacent to the semiconductor layer.

Aspect 24. The method of Aspect 23, wherein the passivation layer is in contact with one or more of the gate insulator layer, the semiconductor layer, the electrode layer, the source and drain, or a combination thereof.

Aspect 25. The method of any one of Aspects 13-24, wherein the triboelectric layer is formed by solution processing, electro-spinning, extrusion, melt processing, or combination thereof.

## Definitions

It is also to be understood that the terminology used herein is for the purpose of describing particular aspects only and is not intended to be limiting.

Throughout the description and claims of this specification, the word "comprise" and variations of the word, such as "comprising" and "comprises," means "including but not limited to," and is not intended to exclude, for example, other components, integers or steps. The term "comprising" can include the embodiments "consisting of' and "consisting essentially of." "Exemplary" means "an example of' and is not intended to convey an indication of a preferred or ideal embodiment. "Such as" is not used in a restrictive sense, but for explanatory purposes.

Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm$10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional additives" means that the additional additives can or cannot be included and that the description includes compositions that both include and do not include additional additives.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound

and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included. As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application. Each of the materials disclosed herein are either commercially available and/or the methods for the production thereof are known to those of skill in the art. It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "0.1% to 5%" or "0.1% to 5%" should be interpreted to include not just 0.1% to 5%, but also the individual values (e.g., 1%, 2%, 3%, and 4%) and the sub-ranges (e.g., 0.1% to 0.5%, 1.1% to 2.2%, 3.3% to 4.4%) within the indicated range. The term "about" as used herein can allow for a degree of variability in a value or range, for example, within 10%, within 5%, or within 1% of a stated value or of a stated limit of a range, and includes the exact stated value or range. The term "substantially" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more, or 100%. While "about" permits some tolerance, a person of ordinary skill in the art would read the specification in light of his knowledge and skill for guidance on the level of that tolerance, and be reasonably apprised to a reasonable degree the metes and bounds of the claims.

In this document, the terms "a," "an," or "the" are used to include one or more than one unless the context clearly dictates otherwise. The term "or" is used to refer to a nonexclusive "or" unless otherwise indicated. The statement "at least one of A and B" has the same meaning as "A, B, or A and B." In addition, it is to be understood that the phraseology or terminology employed herein, and not otherwise defined, is for the purpose of description only and not of limitation. Any use of section headings is intended to aid reading of the document and is not to be interpreted as limiting; information that is relevant to a section heading can occur within or outside of that particular section.

In the methods described herein, the acts can be carried out in any order without departing from the principles of the invention, except when a temporal or operational sequence is explicitly recited. Furthermore, specified acts can be carried out concurrently unless explicit claim language recites that they be carried out separately. For example, a claimed act of doing X and a claimed act of doing Y can be conducted simultaneously within a single operation, and the resulting process will fall within the literal scope of the claimed process.

The term "radiation" as used herein refers to energetic particles travelling through a medium or space. Examples of radiation are visible light, infrared light, microwaves, radio waves, very low frequency waves, extremely low frequency waves, thermal radiation (heat), and black-body radiation. The term "UV light" as used herein refers to ultraviolet light, which is electromagnetic radiation with a wavelength of 10 nm to 400 nm.

The term "cure" as used herein refers to exposing to radiation in any form, heating, or allowing to undergo a physical or chemical reaction that results in hardening or an increase in viscosity.

The term "coating" as used herein refers to a continuous or discontinuous layer of material on the coated surface, wherein the layer of material can penetrate the surface and can fill areas such as pores, wherein the layer of material can have any three-dimensional shape, including a flat or curved plane. In one example, a coating can be

applied to one or more surfaces, any of which can be porous or nonporous, by immersion in a bath of coating material.

The term "surface" as used herein refers to a boundary or side of an object, wherein the boundary or side can have any perimeter shape and can have any three-dimensional shape, including flat, curved, or angular, wherein the boundary or side can be continuous or discontinuous. While the term surface generally refers to the outermost boundary of an object with no implied depth, when the term 'pores' is used in reference to a surface, it refers to both the surface opening and the depth to which the pores extend beneath the surface into the substrate.

As used herein, the term "polymer" refers to a molecule having at least one repeating unit and can include copolymers and homopolymers. The polymers described herein can terminate in any suitable way. In some embodiments, the polymers can terminate with an end group that is independently chosen from a suitable polymerization initiator, -H, - OH, a substituted or unsubstituted ($C_1$-$C_{20}$)hydrocarbyl (e.g., ($C_1$-$C_{10}$)alkyl or ($C_6$-$C_{20}$)aryl) interrupted with 0, 1, 2, or 3 groups independently selected from -O-, substituted or unsubstituted -NH-, and -S-, a poly(substituted or unsubstituted ($C_1$-$C_{20}$)hydrocarbyloxy), and a poly(substituted or unsubstituted ($C_1$-$C_{20}$)hydrocarbylamino).

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code can form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

All publications mentioned herein are incorporated herein by reference to disclose and describe the methods and/or materials in connection with which the publications are cited. The above description is intended to be illustrative, and not restrictive. For example, the above-described examples (or one or more aspects thereof) can be used in combination with each other. Other embodiments can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features can be grouped together to streamline the disclosure. This should not be interpreted as intending that an unclaimed disclosed feature is essential to any claim. Rather, inventive subject matter can lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

**1.** A device comprising:

a triboelectric layer configured to generate one or more of an electrical charge, a voltage, or a current based on a contact event;
an electrode layer comprising a first portion configured as a gate for a thin-film transistor and a second portion configured to supply an electrical signal to the first portion based on the contact event; and
a passivation layer disposed adjacent to the thin-film transistor and between the second portion of the electrode layer and the triboelectric layer.

**2.** The device of claim 1, wherein the electrode layer is disposed adjacent to a substrate.

**3.** The device of any one of claims 1-2, wherein at least a portion of the triboelectric layer is disposed above a material stack comprising the thin-film transistor.

**4.** The device of any one of claims 1-3, wherein the first portion is disposed in a material stack of the thin-film transistor and the second portion extends from the first portion external to the material stack.

**5.** The device of any one of claims 1-4, wherein the passivation layer comprises one or more of poly(p-xylylene) polymer or poly(chloro-p-xylylene) polymer.

6. The device of any one of claims 1-5, wherein passivation layer is formed in a temperature range of 15°C to 35°C.

7. The device of any one of claims 1-6, wherein passivation layer is formed using chemical vapor deposition.

8. The device of any one of claims 1-7, wherein the triboelectric layer comprises a photoactive thermoplastic copolymer and a trifluoropropyl polyhedral oligomeric silsesquioxane.

9. The device of any one of claims 1-8, wherein the thin-film transistor comprises:

a gate insulator layer adjacent to the first portion of the electrode layer;
a semiconductor layer adjacent to the gate insulator layer; and
a source and drain adjacent to the semiconductor layer.

10. The device of claim 9, wherein the passivation layer is in contact with one or more of the gate insulator layer, the semiconductor layer, the electrode layer, the source and drain, or a combination thereof.

11. The device of any one of claims 1-10, wherein the triboelectric layer is formed by solution processing, electrospinning, extrusion, melt processing, or combination thereof.

12. A system comprising the device of any one of claims 1-11.

13. A method comprising:

forming an electrode layer;
forming a thin-film transistor adjacent to a first portion of the electrode layer, wherein the first portion is configured as a gate of the thin-film transistor, and wherein a second portion of the electrode layer extends from the thin-film transistor;
forming a passivation layer adjacent to the thin-film transistor and the second portion of the electrode layer; and
forming a triboelectric layer adjacent to the passivation layer and configured to cause, in response to a contact event, the second portion of the electrode layer to supply an electrical signal to the first portion of the electrode layer.

14. The method of claim 13, wherein the electrode layer is formed adjacent to a substrate.

15. The method of any one of claims 13-14, wherein the second portion of the electrode layer extends beyond an edge of a material stack comprising one or more layers of the thin-film transistor.

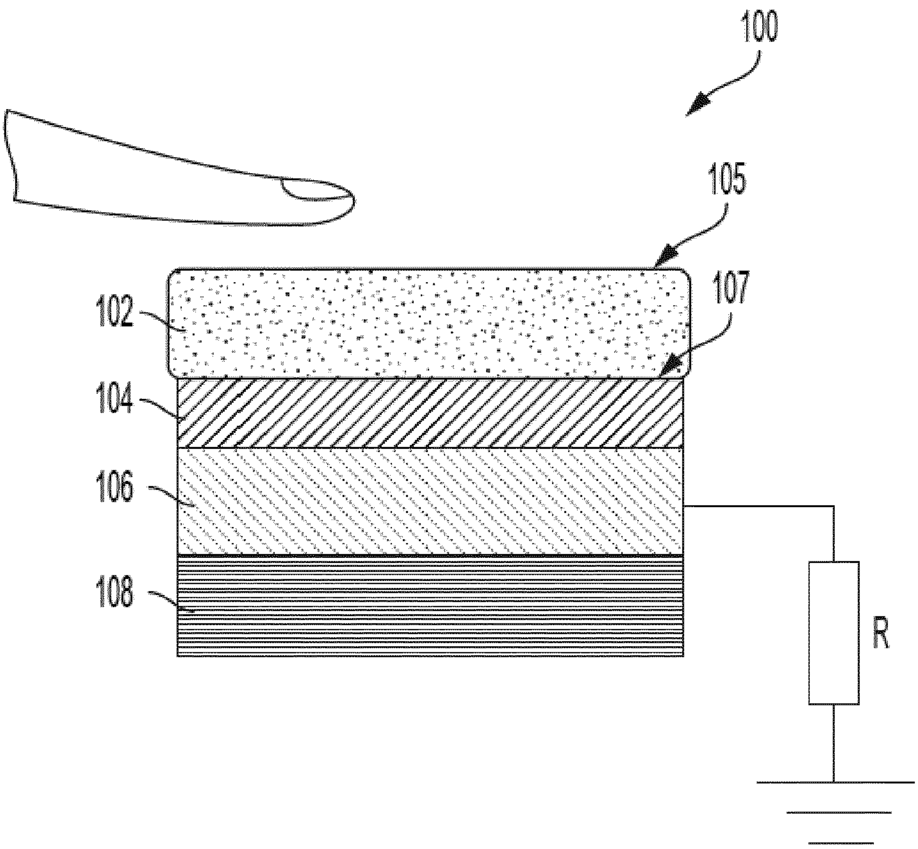
100
105
107
102
104
106
108
R

FIG. 1A

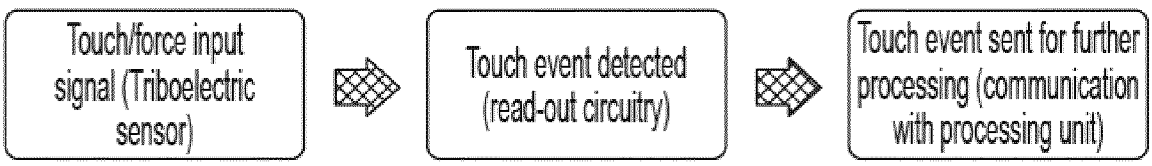
Touch/force input signal (Triboelectric sensor)
Touch event detected (read-out circuitry)
Touch event sent for further processing (communication with processing unit)

FIG. 1B

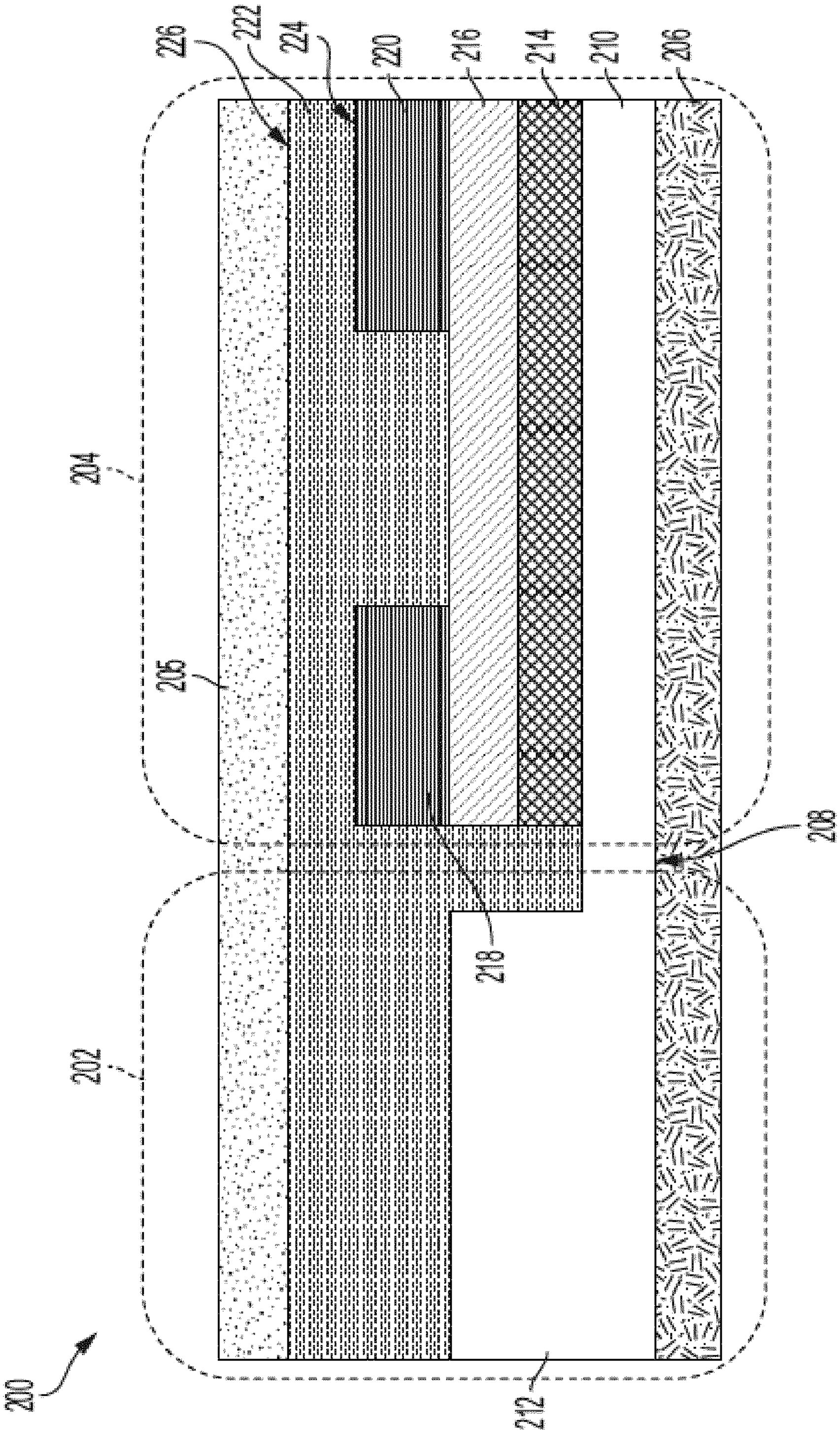


FIG. 2

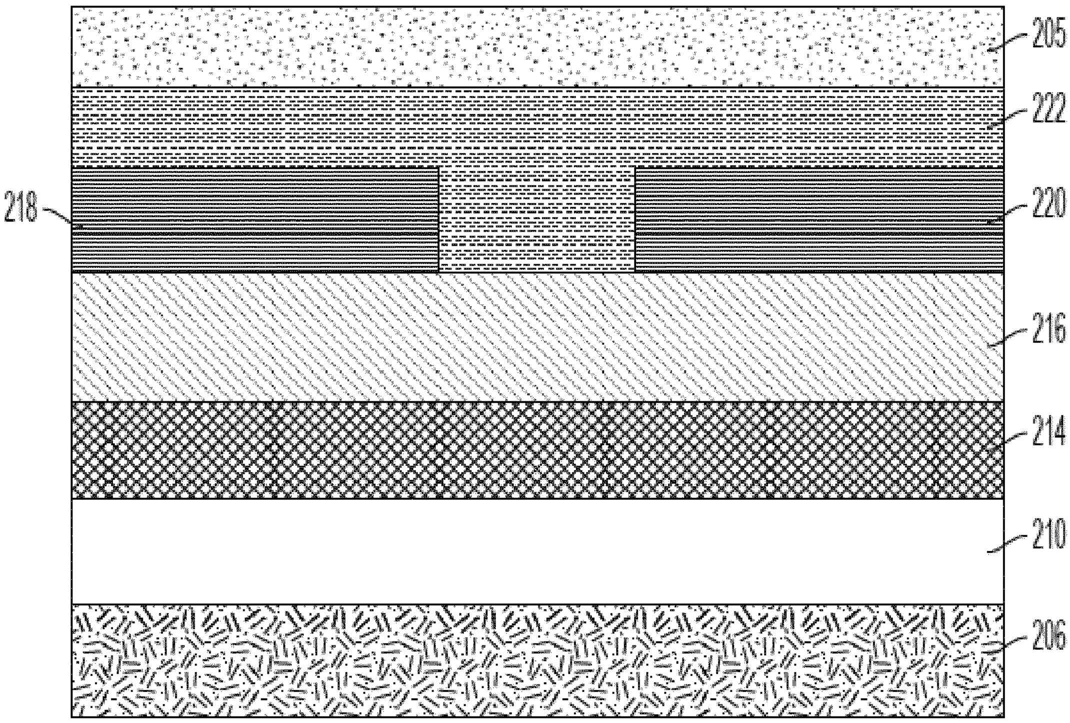


FIG. 3

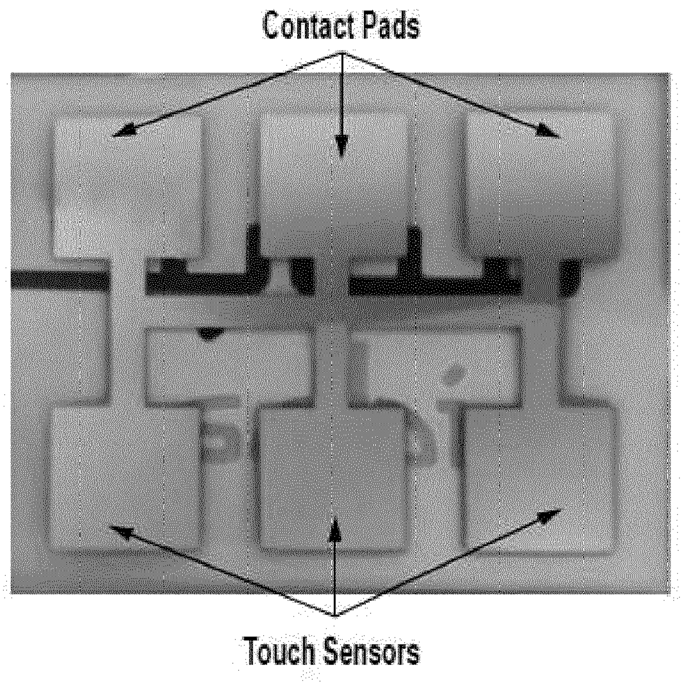
Contact Pads
Touch Sensors

FIG. 4A

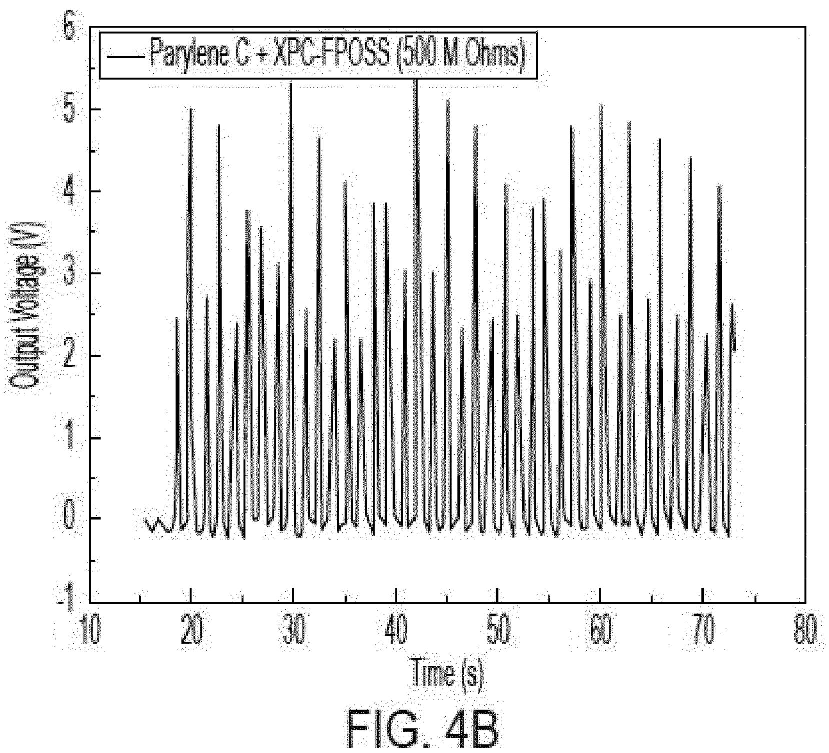
Parylene C + XPC-FPOSS (500 M Ohms)
Output Voltage (V)
Time (s)
6
5
4
3
2
1
0
-1
10
20
30
40
50
60
70
80

FIG. 4B

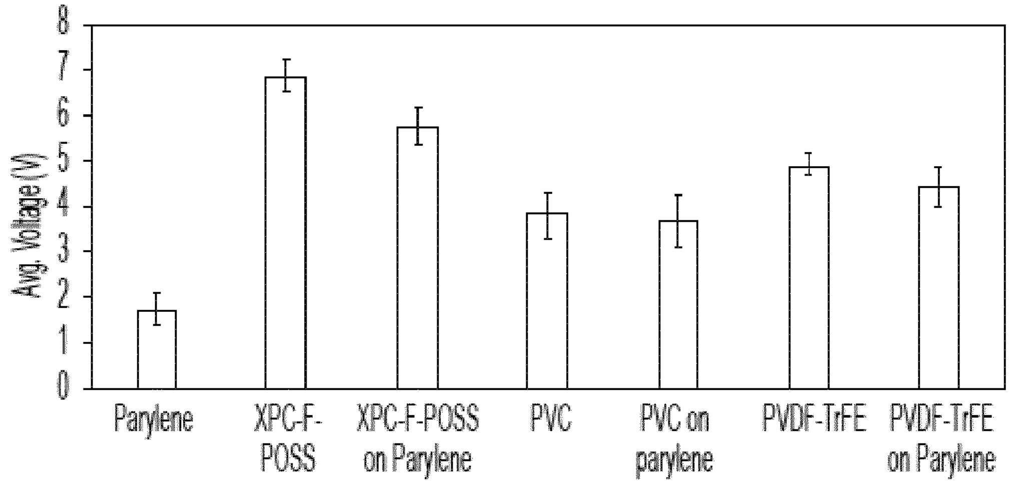
8
7
6
5
4
3
2
1
0
Avg. Voltage (V)
Parylene
XPC-F-POSS
XPC-F-POSS on Parylene
PVC
PVC on parylene
PVDF-TrFE
PVDF-TrFE on Parylene

FIG. 5

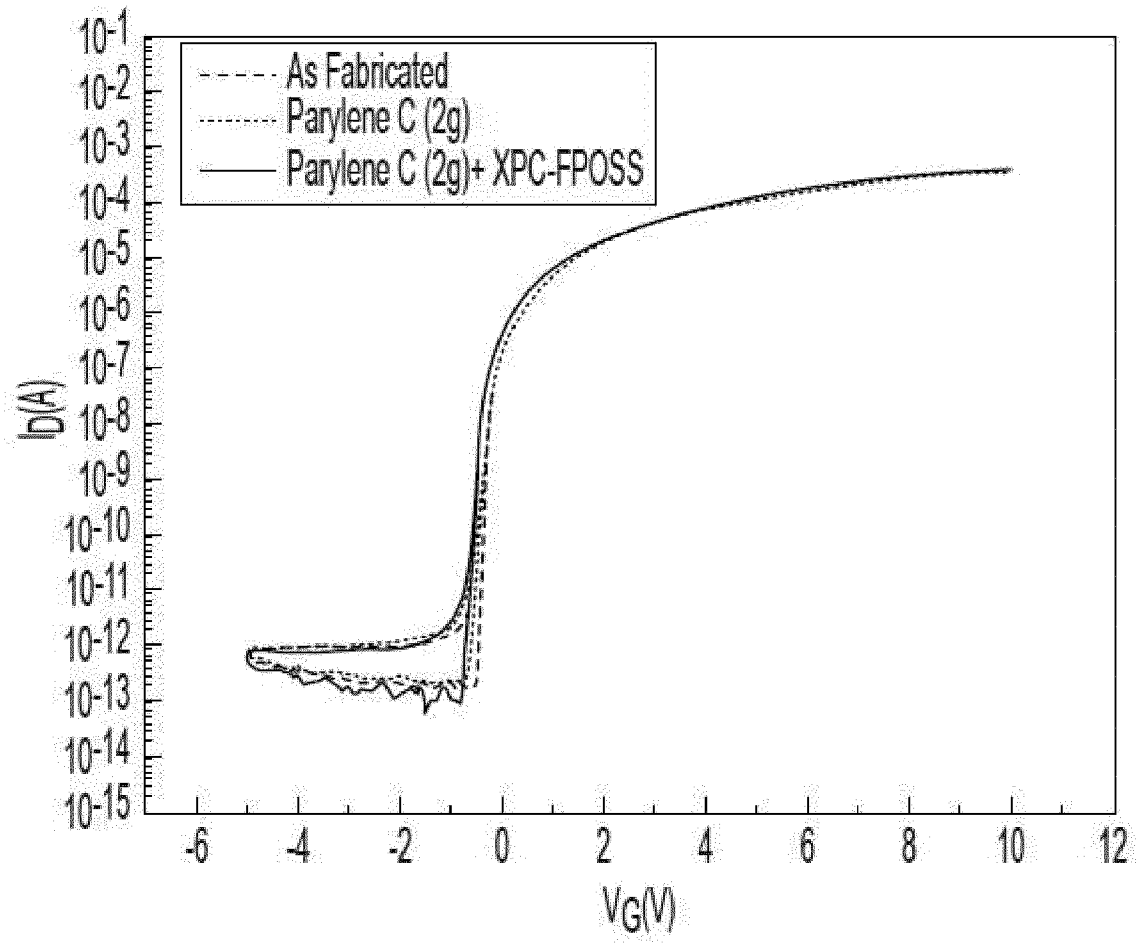
As Fabricated
Parylene C (2g)
Parylene C (2g)+ XPC-FPOSS
10-1
10-2
10-3
10-4
10-5
10-6
10-7
10-8
10-9
10-10
10-11
10-12
10-13
10-14
10-15
ID(A)
-6
-4
-2
0
2
4
6
8
10
12
VG(V)

FIG. 6

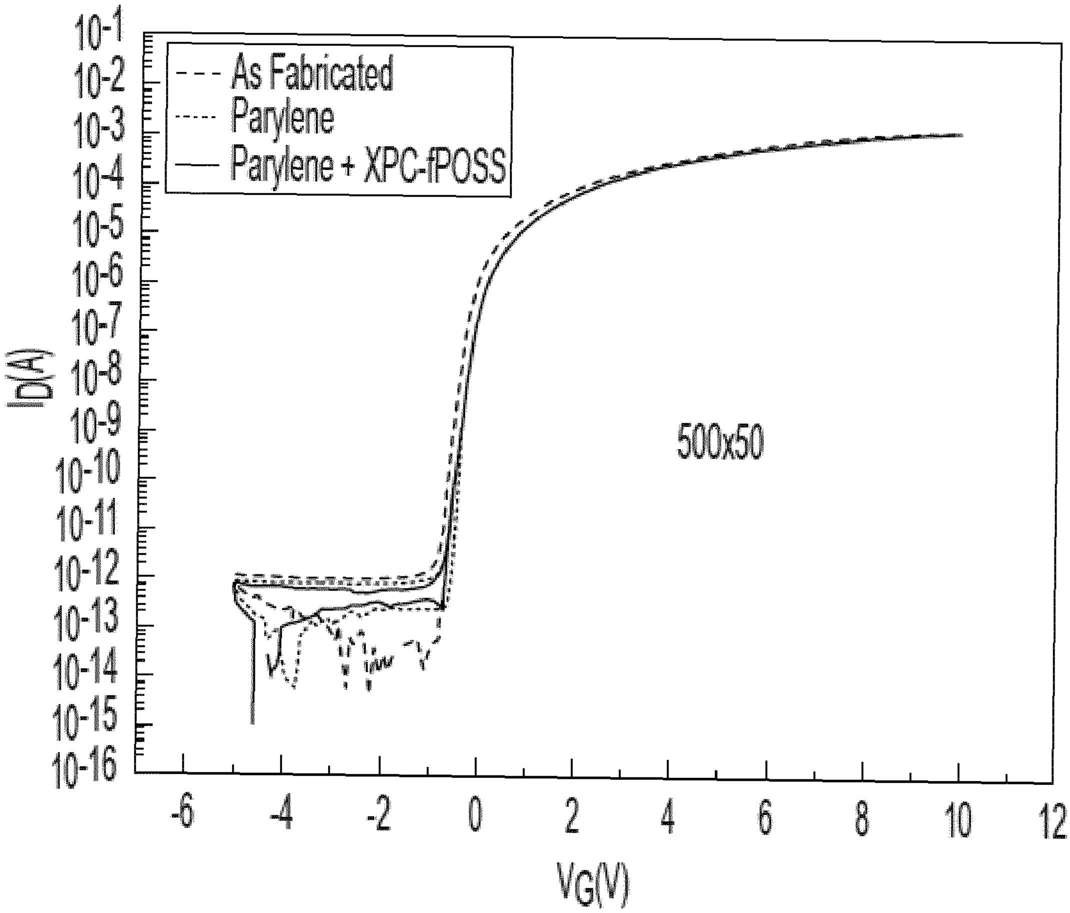

10-1
10-2
10-3
10-4
10-5
10-6
10-7
10-8
10-9
10-10
10-11
10-12
10-13
10-14
10-15
10-16
$I_D(A)$
As Fabricated
Parylene
Parylene + XPC-fPOSS
500x50
-6
-4
-2
0
2
4
6
8
10
12
$V_G(V)$


FIG. 7A

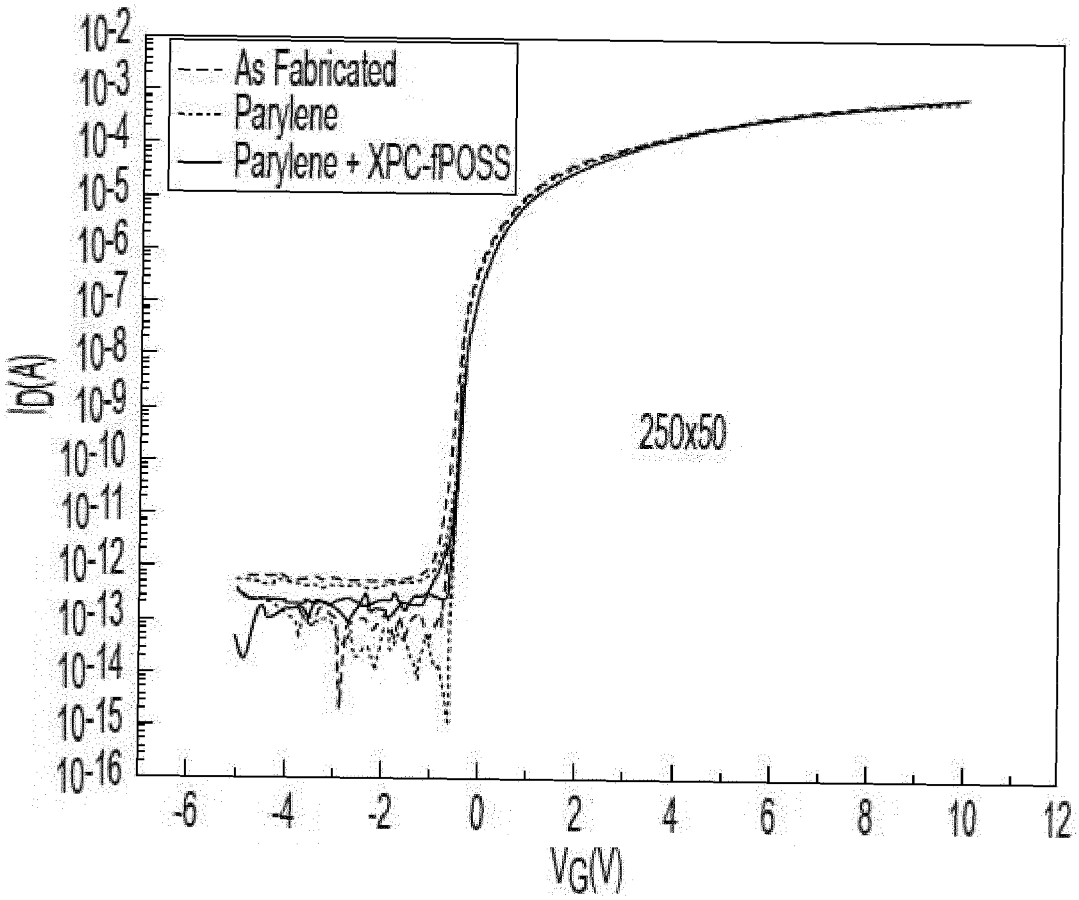
10-2
10-3
10-4
10-5
10-6
10-7
10-8
10-9
10-10
10-11
10-12
10-13
10-14
10-15
10-16
ID(A)
As Fabricated
Parylene
Parylene + XPC-fPOSS
250x50
-6
-4
-2
0
2
4
6
8
10
12
VG(V)

FIG. 7B

Europäisches Patentamt
European Patent Office
Office européen des brevets

# EUROPEAN SEARCH REPORT

Application Number
EP 19 19 5937

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/082107 A1 (SABIC GLOBAL TECHNOLOGIES BV [NL]) 2 May 2019 (2019-05-02) * paragraphs [0002], [0008], [0032], [0036], [0037], [0047], [0040], [0057]; figures 1, 2A * ----- | 1-15 | INV. G06F3/041 G01L1/00 |
| A | CHOI JUN YOUNG ET AL: "Comprehensive review on the development of high mobility in oxide thin film transistors", JOURNAL OF THE KOREAN PHYSICAL SOCIETY, KOREAN PHYSICAL SOCIETY, KR, vol. 71, no. 9, 21 October 2017 (2017-10-21), pages 516-527, XP036344025, ISSN: 0374-4884, DOI: 10.3938/JKPS.71.516 [retrieved on 2017-10-21] * page 9; figure 10 * ----- | 1-15 | |
| A | WI LEE ET AL: "Organic Semiconductor/Insulator Polymer Blends for High-Performance Organic Transistors", POLYMERS, vol. 6, no. 4, 8 April 2014 (2014-04-08), pages 1057-1073, XP055434554, DOI: 10.3390/polym6041057 * paragraph [0003]; figure 2 * ----- | 1-15 | TECHNICAL FIELDS SEARCHED (IPC) G06F H01L G01L |
| A | ZHANG CHI ET AL: "Tribotronics-A new field by coupling triboelectricity and semiconductor", NANO TODAY, ELSEVIER, AMSTERDAM, NL, vol. 11, no. 4, 22 July 2016 (2016-07-22), pages 521-536, XP029731603, ISSN: 1748-0132, DOI: 10.1016/J.NANTOD.2016.07.004 * the whole document * ----- -/-- | 1-15 | |

The present search report has been drawn up for all claims

| Place of search | Date of completion of the search | Examiner |
|---|---|---|
| Berlin | 22 January 2020 | Enzenhofer, Tobias |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 19 19 5937

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | USMAN KHAN ET AL: "Graphene Tribotronics for Electronic Skin and Touch Screen Applications", ADVANCED MATERIALS, vol. 29, no. 1, 27 October 2016 (2016-10-27), page 1603544, XP055547547, DE ISSN: 0935-9648, DOI: 10.1002/adma.201603544 * the whole document * ----- | 1-15 | |
| | | | TECHNICAL FIELDS SEARCHED (IPC) |

The present search report has been drawn up for all claims

3

| Place of search | Date of completion of the search | Examiner |
|---|---|---|
| Berlin | 22 January 2020 | Enzenhofer, Tobias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 19 5937

This annex lists the patent family members relating to the patent documents cited in the above-mentioned European search report. The members are as contained in the European Patent Office EDP file on
The European Patent Office is in no way liable for these particulars which are merely given for the purpose of information.

22-01-2020

| Patent document cited in search report | Publication date | Patent family member(s) | Publication date |
|---|---|---|---|
| WO 2019082107 A1 | 02-05-2019 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20170247507 A
- WO 2018002752 A1